# EUROPEAN PATENT APPLICATION

(11) **EP 3 477 494 A1**
(43) Date of publication of application: **01.05.2019**
(21) Application number: 18194421.6
(22) Date of filing: 14.09.2018
(51) Int. Cl.: G06F 17/21, G06F 17/24, G06F 17/28, G06Q 50/00, G06F 16/44

(54) **DATA PROCESSING METHOD AND DATA PROCESSING SYSTEM USING TRIPARTITE COOPERATIVE COMMUNICATIONS**

(30) Priority: 25.10.2017 TW 106136713
(71) Applicant: Liang, Chia-Yu, 320 Taoyuan City (TW)
(72) Inventor: Liang, Chia-Yu, 320 Taoyuan City (TW)
(74) Representative: Becker Kurig Straus

(57) **Abstract**

A data processing system (100) includes a data input terminal (10), a translation terminal (11), a buyer terminal (12), and a server (13) . The server (13) is linked to the data input terminal (10, the translation terminal (11), and the buyer terminal (12) . After first data is inputted to the server (13) by a data entry user through the data input terminal (10), a translator acquires the first data through the translation terminal (11). The first data is translated to generate second data. The second data is inputted to the server (13) by the translator. A buyer acquires the second data from the server (13) for browsing contents of the second data through the buyer terminal (12).

## Description

### Field of the Invention

The present invention relates to a data processing method and a data processing system, and more particularly, a data processing method and a data processing system using tripartite cooperative communications.

### Background of the Invention

With rapid advancement of internet technologies, users can rapidly find any information through a network device, such as a smart phone or a computer. For example, when a user is travelling abroad, a local network can be used for searching scenery places that he/she wants to visit. Further, the user can open a map program and then acquires his/her current coordinates on the map by using a global positioning system (GPS). Even when the user wants to buy a product or order a meal, the user can check an evaluation of the product or meal through the network as a reference for determining whether it is worthy to purchase or not.

In general, when a user wants to search for some specific information, the user has to input keywords to a search engine provided by a network service. Then, the user can acquire some trivial and messy results. Therefore, the user must manually filter the results for extracting appropriate information since only the filtered results are worth referencing. For example, when a user enters a keyword such as "Boracay" to a Google search engine, 1,560,000 results are generated, including Boracay's history, advertisements, promotions, and scenery places. When the user cannot read entire travel information, the user has to manually enter additional keywords for narrowing the searching set. Although a keyword-based searching method is commonly used, several drawbacks are introduced, leading to reduced operation efficiency. First, since the search engine can find all the results including keywords, the search results are very trivial and messy. Thus, searching useful information requires a lot of time because the search engine is lack of a systematic search mechanism. Second, since the search engine only finds all the results including the keywords, no recommendation service related with the searched results is provided by a virtual or physical guide person. This is especially inconvenient for travel. For example, the user has searched for several accommodation hotels. Unfortunately, scenery places and attractions cannot be planed or navigated around the accommodation hotels by the search engine. Third, data updating frequencies of current search engines of the network are slow. For example, articles searched by Google search engine may be articles published last month. The latest articles may be allocated to a position of low priority so that they are hard to be searched. For another example, when a store launches a promotion (i.e., such as a joining member discount program), the promotion may not be announced to the internet. Therefore, the user may miss an opportunity of the promotion since the user cannot search promotion information from an official website of the store.

In other words, the conventional method for searching data by using the search engine cannot ensure that the results are up-to-date. Further, trivial results and no recommendation/ guided service lead to low operation efficiency.

### Summary of the Invention

The present invention aims at providing a data processing method and a data processing system for providing an instant and satisfactory travel service by using tripartite cooperative communications.

This is achieved by a data processing method and a data processing system according to the claims here below. The dependent claims pertain to corresponding further developments and improvements.

As will be seen more clearly from the detailed description following below, the claimed data processing method comprises inputting first data to a server by a data entry user, translating the first data by a translator to generate second data, inputting the second data to the server by the translator, acquiring the second data from the server by a buyer, and generating a data accessing signal to the server.

As will be seen more clearly from the detailed description following below, another claimed data processing system comprises a data input terminal configured to input first data, a translation terminal configured to translate the first data for generating second data, a server linked to the data input terminal and the translation terminal and configured to receive the first data and the second data, and a buyer terminal linked to the server and configured to acquire the second data from the server and generate a data accessing signal to the server. After the first data is inputted to the server by a data entry user through the data input terminal, a translator acquires the first data through the translation terminal. The first data is translated to generate the second data. The second data is inputted to the server by the translator. A buyer acquires the second data from the server for browsing contents of the second data through the buyer terminal.

The data processing method and the data processing system can provide accurate and instant travel information when the first data and the second data comprise professional tourist attraction advices edited by the data entry user. Therefore, the buyer can acquire recommended attractions of tour without missing important attractions.

### Brief Description of the Drawings

In the following, the invention is further illustrated by way of example, taking reference to the accompanying drawings. Thereof
FIG.1 is a structure of a data processing system according to the embodiment of the present invention;
FIGs 2-15 are illustrations of interfaces corresponding to different operations performed by a data input terminal of the data processing system in FIG.1;
FIGs 16-28 are illustrations of interfaces corresponding to different operations performed by a translation terminal of the data processing system in FIG.1;
FIGs 29-42 are illustrations of interfaces corresponding to different operations performed by a buyer terminal of the data processing system in FIG.1; and
FIG.43 is a flow chart of performing data processing method by using the data processing system in FIG.1.

### Detailed Description

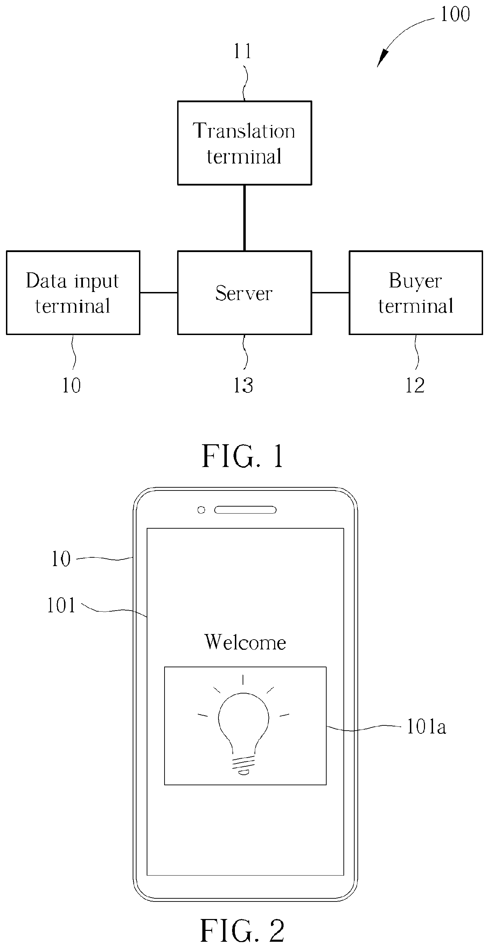

FIG.1 is a structure of a data processing system 100 according to the embodiment of the present invention. The data processing system 100 can be applied to any tripartite cooperative communications system. For example, the data processing system 100 can be applied to an application system developed by a tourism industry, providing instant travel information in conjunction with a guide service. For convenience, the data processing system 100 applied to the application system developed by the tourism industry is introduced and then illustrated below. The data processing system 100 includes a data input terminal 10, a translation terminal 11, a buyer terminal 12, and a server 13. The data input terminal 10 is used for inputting first data. The data input terminal 10 can be a smart phone, a tablet, a notebook, or any device capable of performing network communications. In the embodiment, the data input terminal 10 is operated by a data entry user. The data entry user can be a travel information provider, a publisher or an advertiser with a special view of travel. The first data can be any article inputted by the data entry user, such as tourist guide information, introduction of scenery places, gourmet experience or advertisement discount information. The translation terminal 11 is used for translating the first data to generating second data. The translation terminal 11 can be a smart phone, a tablet, a notebook, or any device capable of performing network communications. In the embodiment, the translation terminal 11 is operated by a translator. The translator has a capability of translating among different languages. The second data can be regarded as a translated version of the first data. The server 13 is linked to the data input terminal 10 and the translation terminal 11 for receiving the first data and the second data. The server 13 can be a computer, a work station, or a cloud data center. The server 13 can provide an application platform for performing data communications among the data entry user, the translator, and a buyer (i.e., as illustrated later). The buyer terminal 12 is linked to the server 13 for acquiring the second data from the server 13 and generating a data accessing signal to the server 13. Similarly, the buyer terminal 12 can be a smart phone, a tablet, a notebook, or any device capable of performing network communications. In the embodiment, the buyer terminal 12 is operated by a buyer. The buyer can be a tourist or a user prepared to travel. The buyer can create an account to be a member of the application platform by using a payment process. Further, the buyer can unlock a data accessing authority by verifying permission of a social network account. By doing so, the buyer can acquire the second data (i.e., translated travel information) . In the data processing system 100, after the first data is inputted to the server 13 by the data entry user through the data input terminal 10, the translator acquires the first data through the translation terminal 11. Further, the translator can translate the first data to generate the second data. The second data is inputted to the server 13 by the translator through the translation terminal 11. Then, the buyer can acquire the second data from the server 13 for browsing contents of the second data through the buyer terminal 12.

As previously mentioned, the server 13 of the data processing system 100 can provide the application platform. For example, the server 13 can provide a travel application platform called "Darebewild". Thus, when an application program of the "Darebewild" platform is installed in the data input terminal 10, the translation terminal 11, and the buyer terminal 12, the data input terminal 10, the translation terminal 11, and the buyer terminal 12 can establish links to the server 13 for accessing data through the application program of the "Darebewild" platform. For simplicity, the data input terminal 10, the translation terminal 11, and the buyer terminal 12 are illustrated as three smartphones later. Cooperative data communications among the data input terminal 10, the translation terminal 11, and the buyer terminal 12 are also illustrated below.

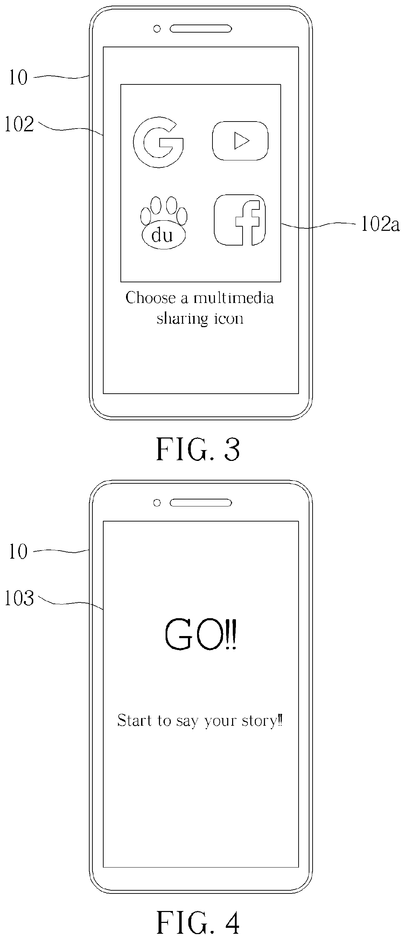

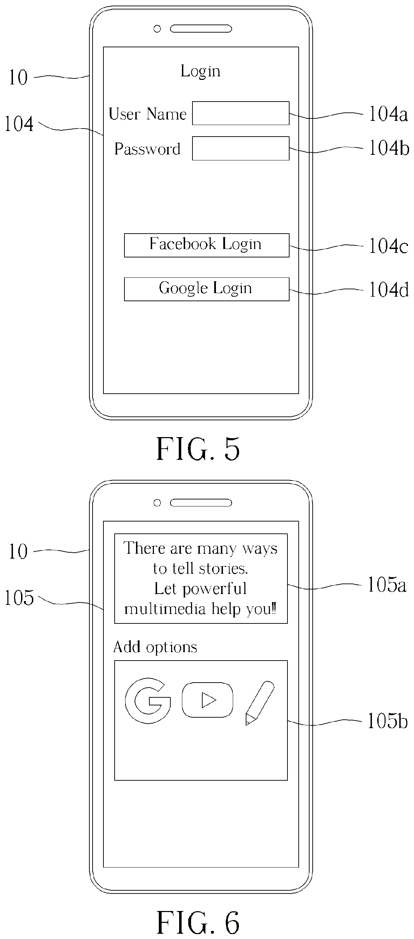

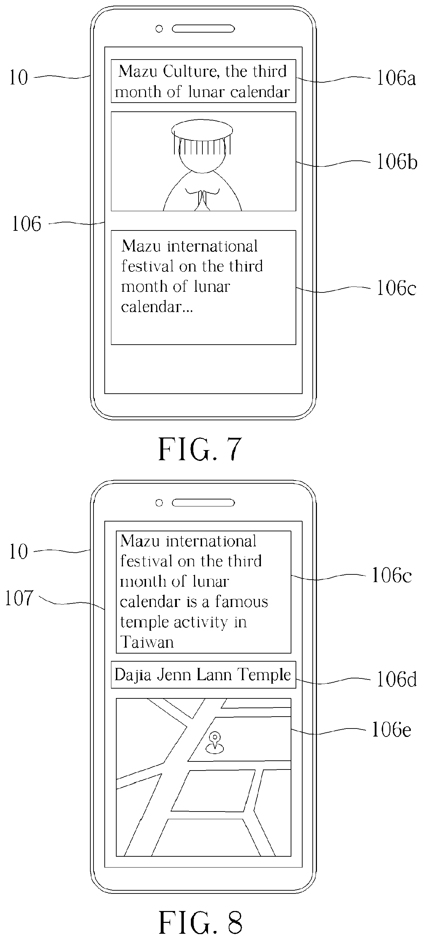

FIGs 2-15 are illustrations of interfaces corresponding to different operations performed by the data input terminal 10 of the data processing system 100. When the data entry user opens the application program installed in the data input terminal 10, an interface 101 in FIG.2 is generated. The interface 101 can be a welcome interface with a window 101a. The window 101a can include a welcome icon. Then, the data input terminal 10 can generate an interface 102 in FIG.3. The interface 102 can include a window 102a for displaying several multimedia sharing icons. For example, the window 102a includes a Google icon, a Facebook icon, a Baidu icon, and a YouTube icon. The data entry user can choose at least one multimedia sharing icon for sharing data to at least one social network platform. Then, the data input terminal 10 can generate an interface 103 in FIG.4. The interface 103 can be regarded as an editor interface. The data entry user can click the editor interface for entering an article editing mode. Further, as previously mentioned, the data entry user can log in the social network for verifying his/her identity. As shown in FIG.5, the data input terminal 10 can display an interface 104. The interface 104 can be a login screen of a social networking website. The interface 104 includes an account login window 104a and a password login window 104b of the social networking site. However, the interface 104 can also provide various login methods through different social networking accounts. For example, the window 104c provides a login method through a Facebook account. The window 104d provides a login method through a Google account. After the data entry user logs in the social network account, the data input terminal 10 can display the interface 105 as shown in FIG.6. The interface 105 can be regarded as an interface for editing an article, including a window 105a and a window 105b. The window 105b lists a photo embedding function for Google, a video embedding function for YouTube, and a text insertion function. However, a map labeling function can also be introduced to the window 105b. The data entry user can easily use at least one multimedia function for editing the first data. For example, in FIG.7 and FIG.8, the interfaces 106 and 107 can display contents of an article edited by the data entry user. The interfaces 106 and 107 can include a window 106a, a window 106b, a window 106c, a window 106d, and a window 106e. The window 106a can display a subject of the article. The window 106b can display an embedded image of the article. The window 106c can display textual contents of the article. The window 106d can display a location tag. The window 106e can display a map label. In other words, the data entry user can edit the first data according to a timeline or a regional address through an editor interface (i.e., as shown in FIG.7 and FIG.8). After the data entry user completes editing the article, the article can be saved in a local memory or uploaded to the server 13 by the data entry user.

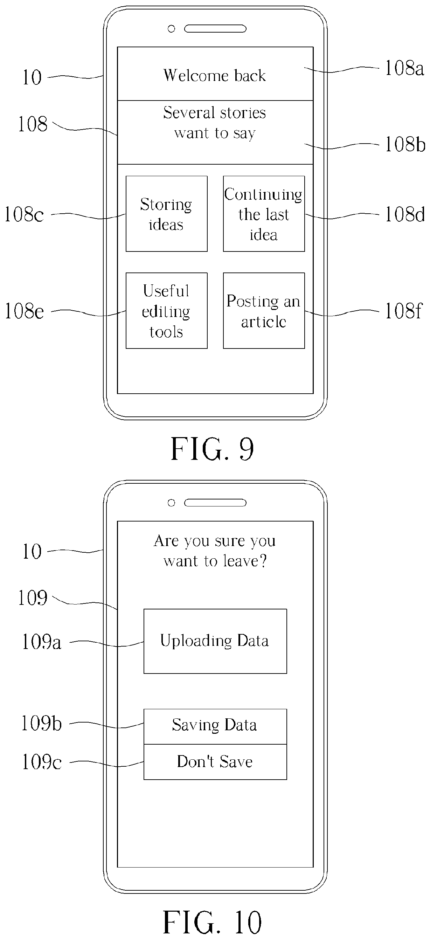

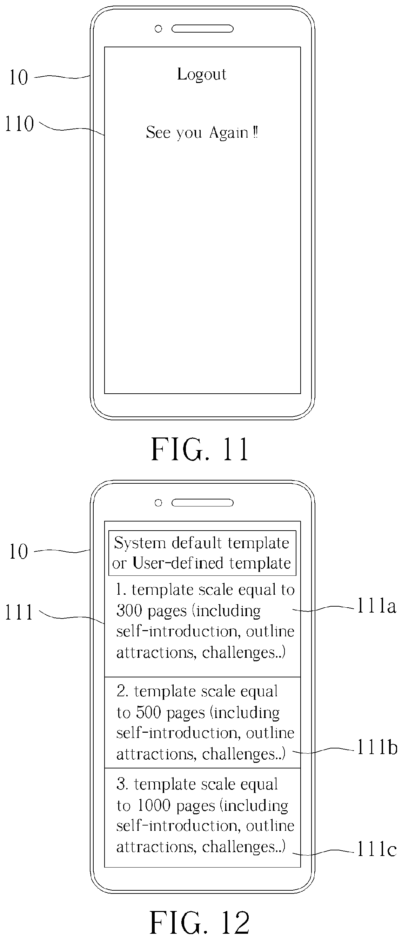

As previously mentioned, the data entry user can log in the social network account through the interface 104. The entry user can log out the social network account anytime. Further, after the data entry user logs in the social network account again, the data input terminal 10 can generate an interface 108 in FIG. 9. The interface 108 can be a first welcome interface. The interface 108 can include a window 108a, a window 108b, a window 108c, a window 108d, a window 108e, and a window 108f. The window 108a and the window 108b include greeting messages. The window 108c, the window 108d, the window 108e, and the window 108f can be windows corresponding to different functions. For example, the window 108c can be a function window for storing ideas. The window 108d can be a function window for continuing the last idea. The window 108e can be a function window for triggering useful editing tools. The window 108f can be a function window for posting an article. The data entry user can choose a function from the first welcome interface (i.e., the interface 108) for updating the first data. Further, the data entry user can upload the updated first data to the server 13. For example, after the data entry user triggers the window 108f for posting an article, the data input terminal 10 can display an interface 109 in FIG.10. The interface 109 can be an uploading interface. The interface 109 can include a window 109a, a window 109b, and a window 109c. The window 109a can be for uploading data. The window 109b can be for storing the data to the local memory. The window 109c can be for refusing to store the data. The data entry user can choose a function for processing the first data. After the data entry user logs out the social network account, the data input terminal 10 can display an interface 110 in FIG.11. The interface 110 can be regarded as a logout interface, including a few pleasantries.

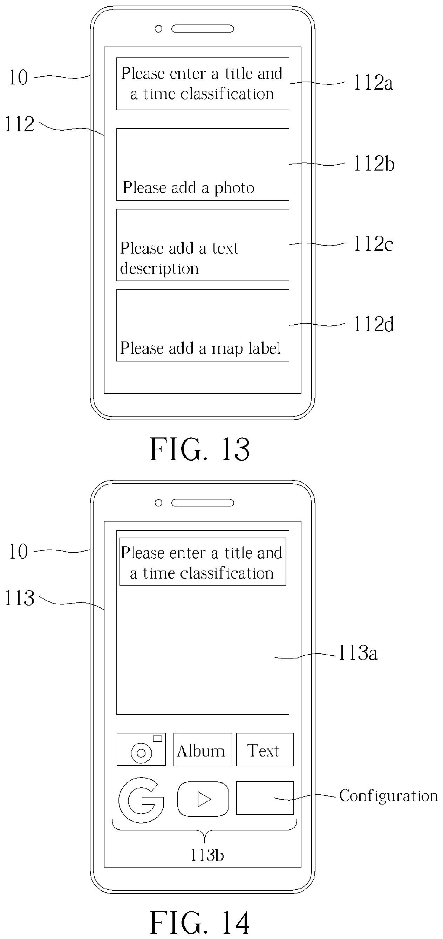

In the data processing system 100, a quick editing method can be introduced to the data entry user for editing article. In FIG.12, the data input terminal 10 can display an interface 111. The interface 111 can be a system default or user-defined template scale interface. For example, the interface 111 can display a window 111a corresponding to a template scale equal to 300 pages, a window 111b corresponding to a template scale equal to 500 pages, and a window 111c corresponding to a template scale equal to 1000 pages. The data entry user can choose a template scale under a template mode for editing an article. For example, the data entry user can choose a template scale equal to 300 pages. Then, the data input terminal 10 can generate an interface 112 in FIG.13. The interface 112 can be an editing layout interface for conveniently editing the article. The interface 112 can include a window 112a, a window 112b, a window 112c, and a window 112d. The window 112a can be prompted to add a title and time classification. The window 112b can be prompted to add a photo. The window 112c can be prompted to add a text description. The window 112d can be prompted to add a map label. The data entry user can edit the article through an interface 113 in FIG.14. For example, the data entry user can use at least one multimedia function displayed on a window 113b for editing the article in an editor window 113a. Similarly, the multimedia functions can include the photo embedding function, the video embedding function, the text insertion function and/or the map labeling function.

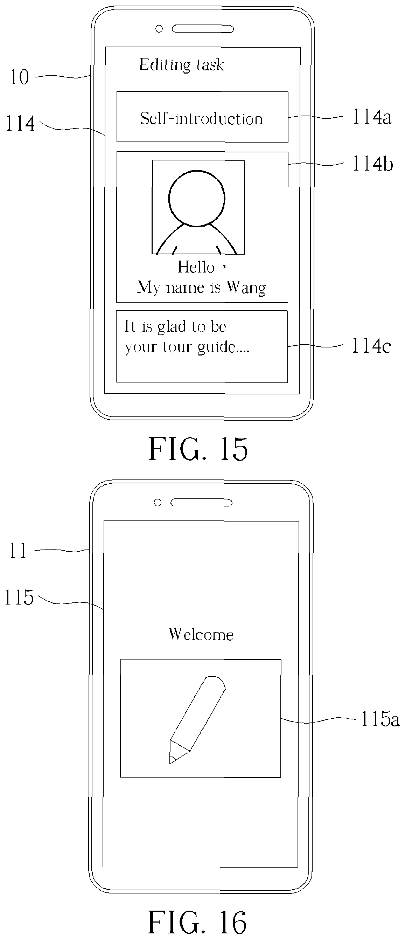

As mentioned previously, the data processing system 100 has a guide capability. Therefore, each data entry user can also be regarded as a tour guide in the internet. The data processing system 100 also provides a function for establishing personal data of these data entry users. For example, in FIG.15, the data input terminal 10 can display an interface 114. The interface 114 can be a personal interface. The interface 114 can include a window 114a, a window 114b, and a window 114c. The window 114a can display a self-introduction field. The window 114b can display a profile picture of the data entry user. The window 114c can display a greeting message of the data entry user. Thus, after the data entry user uploads his/her personal data and article to the server 13 through the travel application platform, the article and its author are bound by the server 13. Hereafter, when the article is browsed by another user, equivalently, the identity of the author (i.e., the data entry user) is changed to an identity of the tour guide. By doing so, the data processing system 100 can effectively provide a quick travel information inquiry service and a guide service of travel.

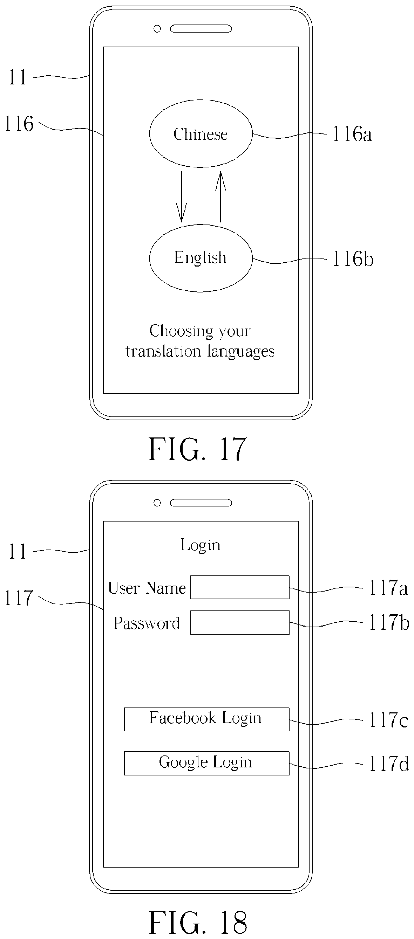

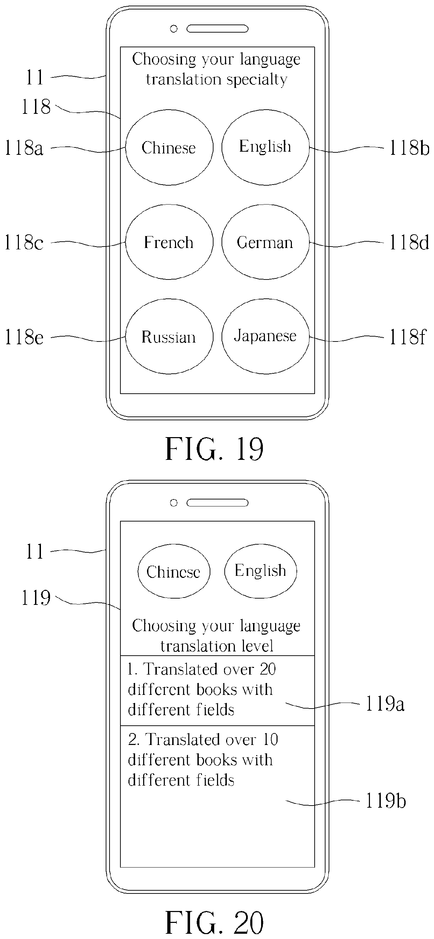

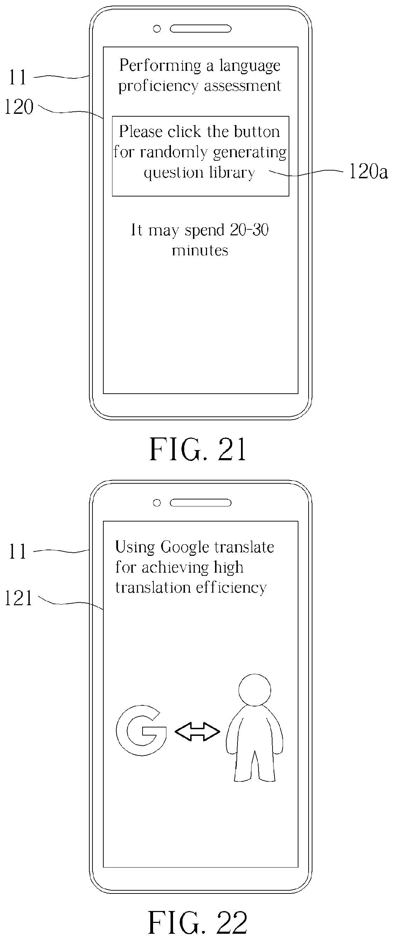

FIGs 16-28 are illustrations of interfaces corresponding to different operations performed by the translation terminal 11 of the data processing system 100. After the translator opens an application program installed in the translation terminal 11, the translation terminal 11 can generate an interface 115 in FIG.16. The interface 115 can be a welcome interface. The interface 115 can include a window 115a with a welcome icon. In the following, the translation terminal 11 can display an interface 116 in FIG.17. The interface 116 can include a window 116a and a window 116b. The window 116a and the window 116b can be two schematic windows with respect to two different languages. For example, when the translator wants to translate between Chinese and English, the window 116a and the window 116b can be selected as a Chinese icon and an English icon respectively. By selecting languages through the window 116a and the window 116b, the translator can be prepared to convert (or say, translate) two different languages. Similarly, the translator can also verify an identity by logging in the social network account. As shown in FIG.18, the translation terminal 11 can display an interface 117. The interface 117 can be a login screen of a social networking website. The interface 117 includes an account login window 117a and a password login window 117b of the social networking site. However, the interface 117 can also provide various login methods through different social networking accounts. For example, the window 117c provides a login method through a Facebook account. The window 117d provides a login method through a Google account. After the translator logs in the social network account, the translation terminal 11 can display the interface 118 as shown in FIG.19. The interface 118 can be a language translation specialty interface. The interface 118 can include a plurality of language translation specialty options. For example, a window 118a to a window 118f can display different language icons for the translator. Therefore, the translator can choose at least one language translation specialty. For example, the translator chooses a translation specialty between Chinese and English. Then, the translation terminal 11 can display an interface 119 in FIG.20. The interface 119 can be a language capability interface. The translator can choose a language translation level through the language capability interface (i.e., interface 119). For example, the interface 119 includes a window 119a corresponding to a high language translation level. The interface 119 includes a window 119b corresponding to a low language translation level. After the language translation level is chosen by the translator, the translation terminal 11 can display an interface 120 in FIG.21. The interface 120 can be a language proficiency assessment certification interface. After the translator clicks a window 120a, a language proficiency assessment is performed by the translator. Then, the translation terminal 11 can generate a result of the language proficiency assessment, and further transmit a certification signal corresponding to the language proficiency assessment to the server 13. Eventually, the server 13 can acquire language capability information of the translator. Then, the server 13 can save the language capability information to a database. Further, the translation terminal 11 can provide an interface 121 in FIG.22. The translator can use a translation device for semi-automatically polishing a translation result of the first data, thereby leading to high translation efficiency.

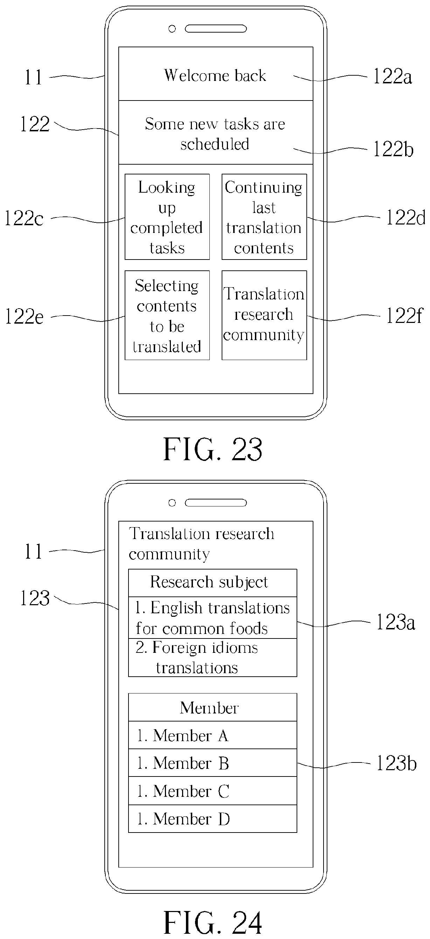

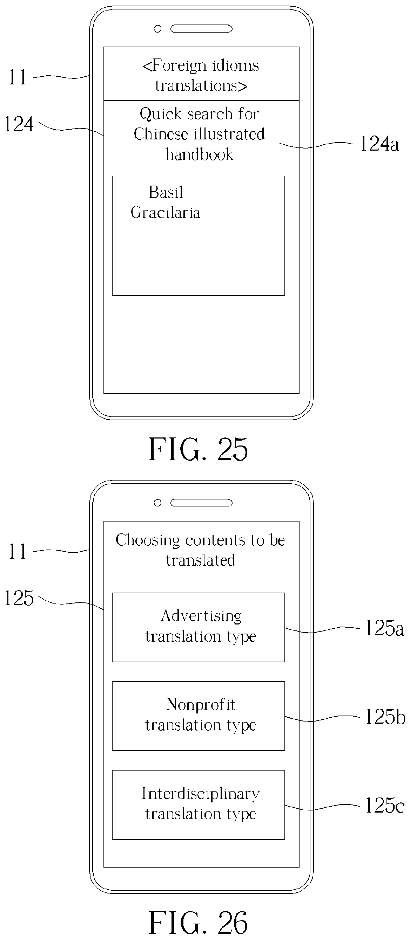

As previously mentioned, the translator can log in the social network account through the interface 117. The translator can log out the social network account anytime. Further, after the translator logs in the social network account again, the translation terminal 11 can generate an interface 122 in FIG.23. The interface 122 can be a second welcome interface. The second interface 122 can include a window 122a, a window 122b, a window 122c, a window 122d, a window 122e, and a window 122f. The window 122a and the window 122b include greeting messages. The window 122c, the window 122d, the window 122e, and the window 122f can correspond to different functions. For example, the window 122c can be triggered to look up completed tasks. The window 122d can be triggered to continue last translation contents. The window 122e can be triggered to select contents to be translated. The window 122f can be linked to a translation research community. The translator can choose a function from the second welcome interface. For example, the translator can trigger the window 122f to join the translation research community. Then, the translator 11 can display an interface 123 in FIG.24. The interface 123 can be a translation research community interface, including a window 123a for displaying several discussion topics and a window 123b for displaying members. The translator can join forum discussion and research discussion of the translation research community through the window 123. Further, as shown in FIG.25, the translator can choose a discussion topic for inquiring an illustrated handbook and/or a forum discussion result of a specific article through a window 124a of an interface 124 of the translation terminal 11. By using discussion data of the translation research community, the translator can provide satisfactory translation quality.

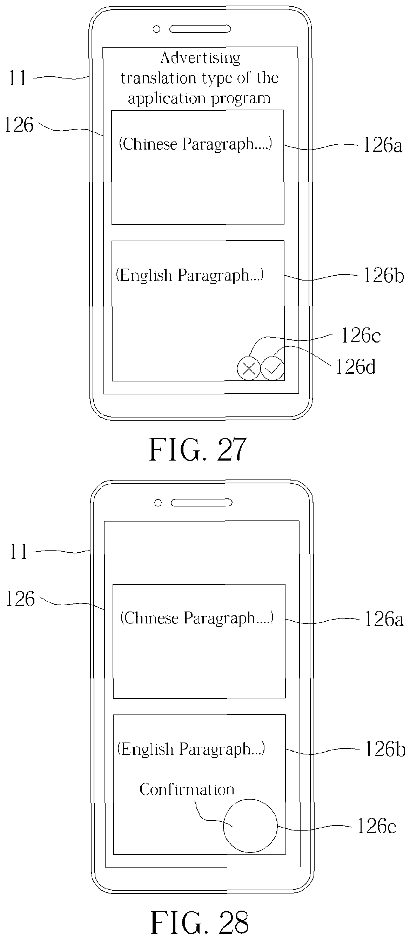

After the translator logs in the social network account through the interface 117, the translator can choose contents to be translated through the window 122e. In the following, the translation terminal 11 can display an interface 125 in FIG.26. The interface 125 can be a translator type interface, including a window 125a, a window 125b, and a window 125c. The window 125a can display an advertising translation type of the application program. The window 125b can display a nonprofit translation type. The window 125b can display an interdisciplinary translation type. The translator can choose a translator type through the translator type interface for translating the first data to the second data. For example, the translator can choose the advertising translation type of the application program displayed in the window 125a. Then, the translation terminal 11 can generate an interface 126 in FIG.27. The interface 126 can be a translation interface. The interface 126 can include a window 126a and a window 126b. The window 126a can display a Chinese paragraph to be translated. The window 126b can display an English paragraph corresponding to the translated Chinese paragraph. The interface 126 can further include a button 126c and a button 126d. The button 126c is a cancel key for cancelling current translated contents. The button 126d is a save key for temporarily saving the current translated contents. Further, the translator can click a confirm key 126e in FIG.28 for saving and uploading the current translated contents (i.e., the second data) to the server 13.

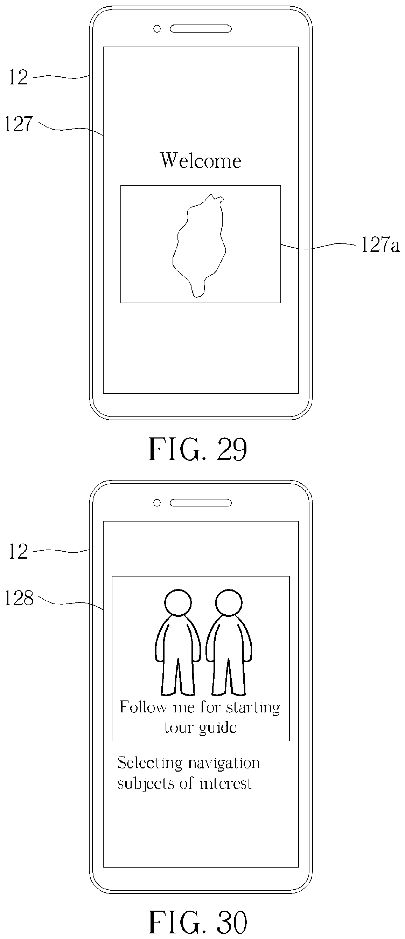

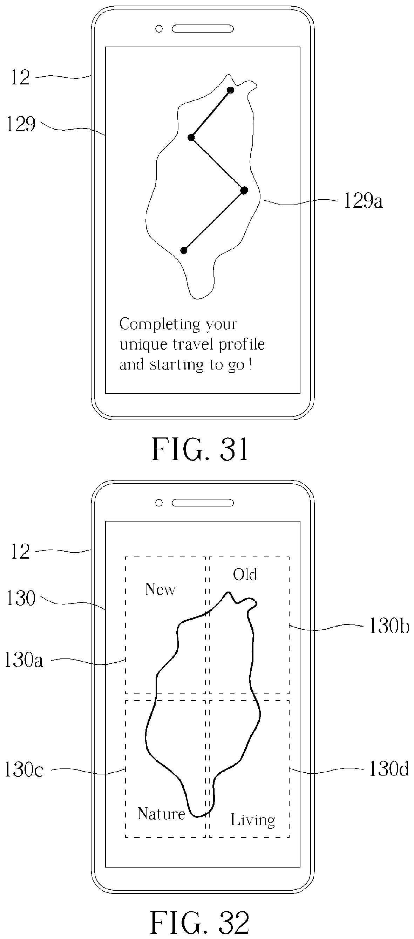

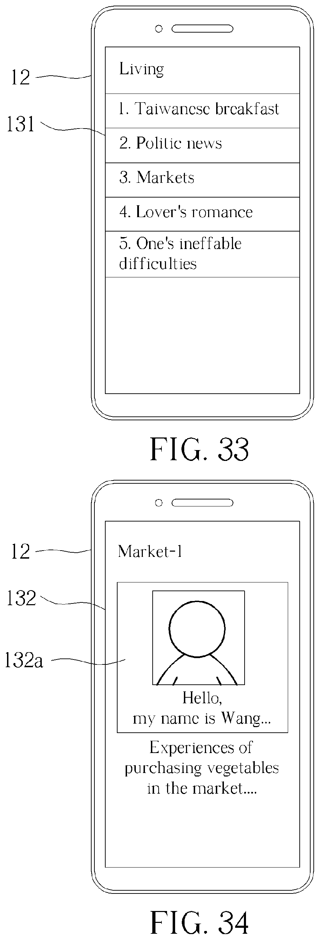

FIGs 29-42 are illustrations of interfaces corresponding to different operations performed by a buyer terminal 12 of the data processing system 100. After the buyer opens an application program installed in the buyer terminal 12, the buyer terminal 12 can generate an interface 127 in FIG.29. The interface 127 can be a welcome interface with a window 127a. The window 127a can include a welcome icon. Then, the buyer terminal 12 can generate an interface 128 in FIG.30. The interface 128 can be a navigation welcome interface of a specialized guidebook. The buyer can click the interface 128 or wait for an animation of navigation, and then select a navigation subject of interest. For example, the buyer can plan his/her travel itinerary by selecting a destination like "Taipei", "Taichung", "Hualien", "Pingtung". The buyer terminal 12 can determine a language requirement of the buyer when the application program is installed in the buyer terminal 12. Then, the buyer terminal 12 can generate an interface 129 in FIG.31. The interface 129 can be a customized travel profile interface, including a window 129a for displaying the itinerary of the outline map (i.e., for example, Taiwan). In other words, the buyer can plan a unique travel profile through the buyer terminal 12. Then, the buyer can choose a category of the customized travel profile through the buyer terminal 12. As shown in FIG.32, the buyer terminal 12 can display an interface 130. The interface 130 can be a category interface, including a category window 130a of "New", a category window 130b of "Old", a category window 130c of "Nature", and a category window 130d of "Living". For example, the "New" category can include a plurality of sub-categories, such as architecture, art, colors, roundabout, coffee shops, bookstores, lover's romance and more. The "Old" category can include a plurality of sub-categories, such as history, Longshan Temple, religious culture, diet culture, Matsu culture, catering culture and more. The "Natural" category can include a plurality of sub-categories such as jades, fishes, oceans, mountains, birds, stargazing, walking trails and more. The "Living" category can include a plurality of sub-categories such as breakfast, markets, motorcycles, people, politics, one's ineffable difficulties, garbage bins, travel security issues, ballads, pop music and temples (i.e., religious sites), leisure and more. For example, after the buyer chooses the "Living" category, the buyer terminal 12 can display an interface 131 in FIG. 33 for listing a plurality of sub-categories of the "Living" category. Then, the buyer can choose a sub-category from the plurality of sub-categories for browsing contents of the second data categorized in the sub-category. For example, if the buyer chooses the "market" sub-category through the interface 131, the buyer terminal 12 can access data from the server 13 and generate an interface 132 in FIG.34. The interface 132 can display guide contents provided by a tour guide, including a profile picture of the tour guide and a window 132a for displaying greetings.

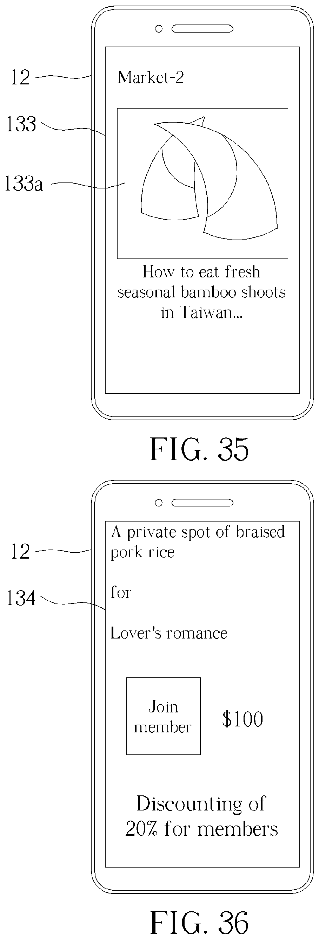

In the embodiment, the guide contents of the interface 132 can be displayed by using a page card mode. As shown in FIG.34 and FIG.35. When the guide contents are very long, the buyer terminal 12 can partition and paginate the guide contents into two content pages displayed on an interface 132 and an interface 133. For example, the interface 132 can display "market-1", which is denoted as a first page of the guide contents. The interface 133 can display "market-2", which is denoted as a second page of the guide contents. Similarly, the interface 133 can include a window 133a for introducing an object image and a guide text. Generally, data (guide contents) of the sub-category can include text data, photo data, image data, and/or map labeling data. The data (guide contents) of the sub-category can be displayed by using the page card mode. Therefore, the buyer can clearly browse the guide contents edited by a tour guide. Further, by choosing the sub-category, the buyer can acquire a coupon corresponding to the sub-category. For example, in FIG.36, after the buyer chooses the "lover's romance" sub-category in the "Living" category, the buyer terminal 12 can display an interface 134. The interface 134 can be a coupon interface. For example, the server 13 can recommend a private spot of braised pork rice (i.e., an article written by a pseudonym blogger) to the buyer through the buyer terminal 12. Then, the buyer terminal 12 can list a method for getting coupons (i.e., for example, join a member for getting coupons) . By doing so, the buyer can benefit by a product discount when a discount coupon or a discount plan is held.

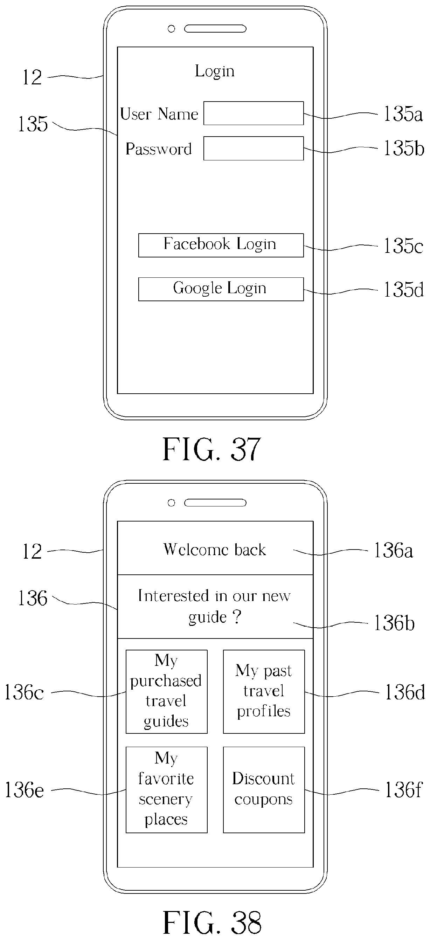

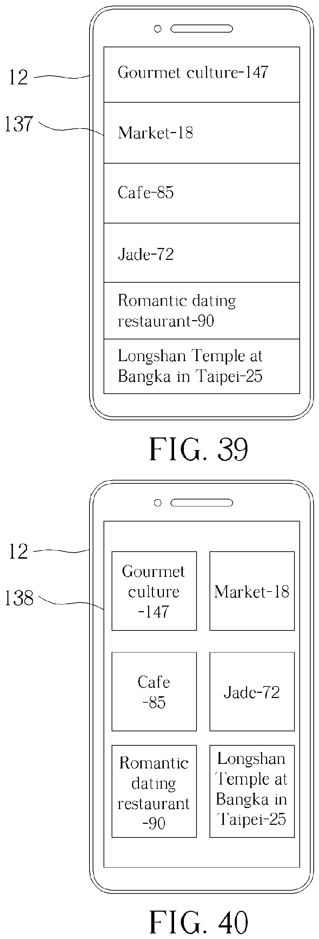

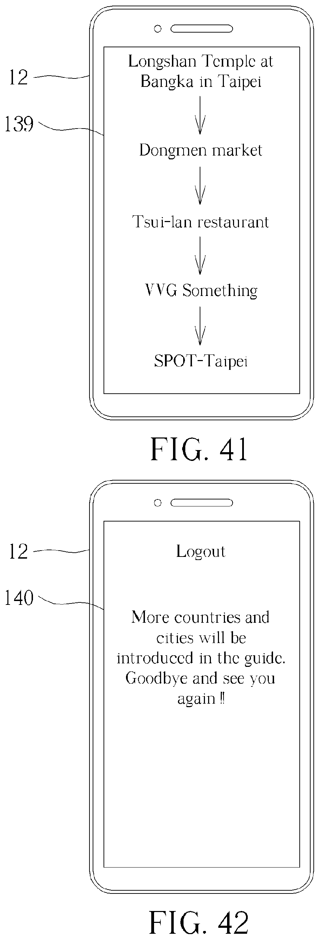

Similarly, the buyer can log in the social network for verifying his/her identity. As shown in FIG.37, the buyer terminal 12 can display an interface 135. The interface 135 can be a login screen of a social networking website. The interface 135 includes an account login window 135a and a password login window 135b of the social networking site. However, the interface 135 can also provide various login methods through different social networking accounts. For example, the window 135c provides a login method through a Facebook account. The window 135d provides a login method through a Google account. After the buyer logs in the social network account, the buyer terminal 12 can generate an interface 136 in FIG.38. The interface 136 can be regarded as a third welcome interface. The interface 136 can include a window 136a, a window 136b, a window 136c, a window 136d, a window 136e, and a window 136f. The window 136a and the window 136b include greeting messages. The window 136c, the window 136d, the window 136e, and the window 136f can correspond to different functions. For example, the window 136c can be linked to my purchased travel guides. The window 136d can be linked to my past travel profiles. The window 136e can be linked to my favorite scenery places . The window 136f can be linked to discount coupons. The buyer can choose a function from the third welcome interface for generating a plurality of classification options. For example, after the buyer clicks on the window 136d, the buyer terminal 12 can display an interface 137 in FIG.39. The interface 137 lists a plurality of classification options corresponding to the past travel profiles, such as a gourmet culture, a market, and a cafe. Further, the interface 137 can display a page index corresponding to the classification options. For example, "Gourmet culture-147" is denoted as a 147^{th} page of an article edited by a tour guide categorized as the "gourmet culture". "Market-18" is denoted as an 18^{th} page of an article edited by a tour guide categorized as the "market". The plurality of classification options are not necessarily allocated according to row-by-row text titles in FIG.39. For example, as an interface 138 in FIG.40, the plurality of classification options can be allocated according to thumbnail windows. The buyer can visually click a function window for selecting a desired classification option. The buyer terminal 12 can display an interface 139 in FIG.41. The interface 139 can include a unique and customized travel profile. The travel profile can be planned by adding more points of interest. Each point of interest corresponds to a guide service of a tour guide. For example, "Longshan Temple at Bangka in Taipei" can correspond to page 25 of an article edited by a temple guide. "Dongmen market" can correspond to page 79 of an article edited by a market guide. "Tsui-lan restaurant" can correspond to page 145 of an article edited by a Taiwanese food guide. "VVG Something" can correspond to page 5 of an article edited by a bookstore guide. "SPOT-Taipei" can correspond to page 100 of an article of a Japanese architecture guide. Since the buyer can acquire recommended scenery places and experiences from various tour guides, the buyer can travel in a very relaxed and efficient manner without missing important attractions. Finally, when the buyer logs out of the social networking account, the buyer terminal 12 can display an interface 140 in FIG.41. The interface 140 can be regarded as a logout interface, including logout words.

As previously mentioned, the data processing method 100 can perform tripartite cooperative communications among the data input terminal 10, the translation terminal 11, and buyer terminal 12 synchronously. Therefore, a software program or a hardware can be introduced to the data processing method 100 for partitioning processing programs into foreground processing tasks and background processing tasks. The foreground processing tasks can includes data managements of the "New" category, the "Old" category, the "Nature" category, the "Living" category, and their sub-categories. The background processing tasks can include user data managements and travel data managements. The user data managements include a translation management, a data input management, a regional language management, a user identifier management, a user profile photo management, an E-mail management, a telephone number management, a nationality management, a data accessing authority management (i.e., a translation authority, a data input authority, and a purchase authority), and an account status management. The travel data managements include a scenery places management and a management of self-introduction data for tour guides. In the data processing method 100, a browsing authority of the second data can be unlocked by using a payment process. Further, the data accessing authority for the data entry user, the translator, or the buyer can be unlocked by verifying permission of the social network account. Additionally, after the buyer acquires an article of a specific tour guide, the buyer terminal 12 can generate a data accessing signal to the server 13. Then, the server 13 can generate a popularity level, a click rate, and/or a preference level corresponding to the second data (i.e., the article acquired by the buyer) according to the data accessing signal. Further, as previously mentioned, the data entry user can be regarded as a tour guide. A guide article provided/edited by the data entry user can be translated by the translator. Therefore, the guide article can be converted to a regional language based guide article and can be purchased by the buyer. In other words, the "first data" previously mentioned can be the guide article provided by the data entry user. The "second data" previously mentioned can be the translated guide article corresponding to the regional language of the buyer.

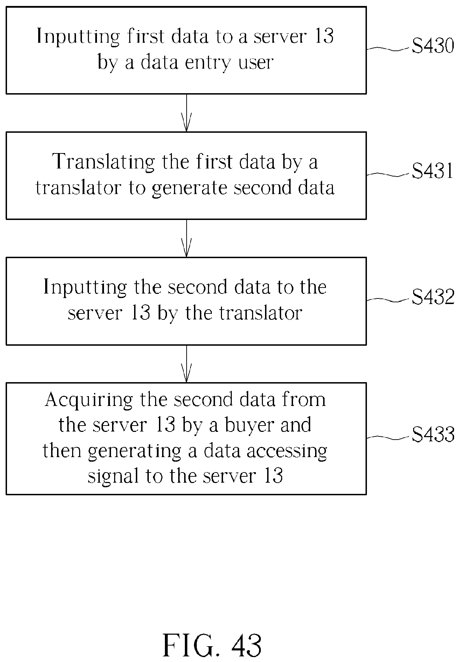

FIG.43 is a flow chart of performing data processing method by using the data processing system 100. The data processing method includes step S430 to step S433. Any reasonable step modification falls into the scope of the present invention. Step S430 to step S433 are illustrated below.
- step S430:: inputting first data to a server 13 by a data entry user;
- step S431:: translating the first data by a translator to generate second data;
- step S432:: inputting the second data to the server 13 by the translator;
- step S433:: acquiring the second data from the server 13 by a buyer and then generating a data accessing signal to the server 13.

Step S430 to step S433 are illustrated in aforementioned embodiments. Thus, the illustrations of step S430 to step S433 are omitted here. In the data processing system 100, by using tripartite cooperative data communications among data input terminal 10, the translation terminal 11, and the buyer terminal 12, some advantages can be introduced. First, the data entry user can benefit from increased reputation or increased advertising revenue. Second, the translator can train his/her translation skills for achieving a higher level of translation in order to increase self-worth and revenue. Third, the buyer can travel in a very relaxed and efficient manner without missing attractions at various destinations.

To sum up, the present invention discloses a data processing method and a data processing system for data communications among the data entry user, the translator, and the buyer. The data processing method and the data processing system can be applied to a travel service system for providing a service of establishing travel data and accessing the travel data. Further, the data processing system can verify identities of members through a social network. Therefore, when the buyer is a tourist or a user prepared to travel, the buyer can use the data processing system for searching various guide articles of travel corresponding to different data entry users. Since the data entry user can be regarded as a tour guide, the buyer can acquire recommended attractions from the guide article provided by the tour guide. By doing so, the buyer can travel in a very relaxed and efficient manner without missing important attractions.

## Claims

1. A data processing method, **characterized by** comprising:
inputting first data to a server (13) by a data entry user;
translating the first data by a translator (11) to generate second data;
inputting the second data to the server (13) by the translator (11) ;
acquiring the second data from the server (13) by a buyer (12) ; and
generating a data accessing signal to the server (13).

2. The method of claim 1, **characterized by** further comprising:
the data entry user logging in a social network account (104) ; and
choosing at least one multimedia function (105b) for editing the first data after the social network account (104) is already logged in;
wherein the at least one multimedia function (105b) comprises a photo embedding function, a video embedding function, a text insertion function and/or a map labeling function.

3. The method of claim 2, **characterized in that** choosing the at least one multimedia function for editing the first data comprises:
editing the first data according to a timeline or a regional address through an editor interface (106, 107).

4. The method of claim 2, **characterized by** further comprising:
generating a first welcome interface (108) after the data entry user logs in the social network account (104) again;
choosing a function (108a, 108b, 108c, 108d) from the first welcome interface (108) by the data entry user for updating the first data;
uploading the updated first data to the server (13) by the data entry user; and
logging out the social network account (104).

5. The method of any one of the preceding claims, **characterized by** further comprising:
choosing a template scale (111a, 11b, 111c) under a template mode by the data entry user;
providing an editing layout (112a, 112b, 112c, 112d) corresponding to the template scale (111a, 11b, 111c);
choosing at least one multimedia function (113b) for editing the first data by using the editing layout (112a, 112b, 112c, 112d);
wherein the editing layout (112a, 112b, 112c, 112d) is a user-defined editing layout or a default editing layout, and the at least one multimedia function (113b) comprises a photo embedding function, a video embedding function, a text insertion function and/or a map labeling function.

6. The method of any one of the preceding claims, **characterized by** further comprising:
editing personal data through a personal interface (114) by the data entry user.

7. The method of any one of the preceding claims, **characterized in that** the data entry user is a travel information provider, a publisher or an advertiser with a special view of travel, and the buyer is a tourist or a user prepared to travel.

8. The method of any one of the preceding claims, **characterized by** further comprising:
choosing a language translation option (116a, 116b) by the translator (11);
wherein the second data corresponds to the language translation option (116a, 116b).

9. The method of any one of the preceding claims, **characterized by** further comprising:
the translator (13) logging in a social network account (117);
choosing at least one language translation specialty (118a, 118b, 118c, 118d, 118f) by the translator after the social network account is already logged in; and
choosing a language translation level (119a, 119b) by the translator (11) through a language capability interface (119) .

10. The method of claim 9, **characterized by** further comprising:
performing a language proficiency assessment certification (120) by the translator (11) after the language translation level (119a, 119b) is chosen; and
generating a certification signal corresponding to the language proficiency assessment certification (120) of the translator (11) to the server (13).

11. The method of claim 9 or 10, **characterized by** further comprising:
generating a second welcome interface (122) after the translator logs in the social network account again;
choosing a function from the second welcome interface (122) by the translator (11) for joining a translation research community (122f);
choosing a discussion topic (123a) for inquiring an illustrated handbook and/or a forum discussion result of a specific article; and
logging out the social network account (117).

12. The method of claim 9 or 10, **characterized by** further comprising:
generating a second welcome interface (122) after the translator logs in the social network account again; and
choosing a function from the second welcome interface (122) by the translator (11) for entering a translator type interface (125);
wherein a translator type of the translator type interface (125) is chosen by the translator (11) through the translator type interface (125) for translating the first data to the second data, and the translator type comprises an advertising translation type (125a), a nonprofit translation type (125b), or an interdisciplinary translation type (125c).

13. The method of any one of the preceding claims, **characterized by** further comprising:
using a translation device by the translator (11) for polishing a translation result of the first data semi-automatically.

14. The method of any one of the preceding claims, **characterized by** further comprising:
determining a language requirement of the buyer;
choosing at least one subject of interest through a navigation interface (128); and
generating a customized travel profile (129, 129a) according to the at least one subject of interest.

15. The method of claim 14, **characterized by** further comprising:
choosing a category (130a, 130b, 130c, 130d) of the customized travel profile (129, 129a) by the buyer;
generating a plurality of sub-categories (131) of the category (130a, 130b, 130c, 130d); and
choosing a sub-category from the plurality of sub-categories (131) for browsing contents of the second data categorized in the sub-category;
wherein the contents of the second data categorized in the sub-category comprises text data, photo data, image data, and/or map labeling data, and the second data of the sub-category is displayed by using a page card mode.

16. The method of claim 14, **characterized by** further comprising:
choosing a category 130a, 130b, 130c, 130d) of the customized travel profile (129, 129a) by the buyer;
generating a plurality of sub-categories (131)of the category; and
choosing a sub-category from the plurality of sub-categories for acquiring a coupon (134) corresponding to the sub-category.

17. The method of any one of the preceding claims, **characterized by** further comprising:
generating a third welcome interface (136) after the buyer logs in a social network account (135);
choosing a function from the third welcome interface (136) by the buyer for generating a plurality of classification options (137);
choosing a classification option from the plurality of classification options by the buyer;
displaying a plurality of articles (138) corresponding to the classification option; and
choosing an article from the plurality of articles for browsing detail contents of the article.

18. The method of any one of the preceding claims, **characterized in that**:
a browsing authority of the second data is unlocked by a payment process; and
a data accessing authority for the data entry user, the translator (11), or the buyer is unlocked by verifying permission of a social network account (104, 107, 135).

19. The method of any one of the preceding claims, **characterized in that** the server (13) generates a popularity level, a click rate, and/or a preference level corresponding to the second data according to the data accessing signal.

20. A data processing system (100), **characterized by** comprising:
a data input terminal (10) configured to input first data;
a translation terminal (11) configured to translate the first data for generating second data;
a server (13) linked to the data input terminal (10) and the translation terminal (11) and configured to receive the first data and the second data; and
a buyer terminal (12) linked to the server (13) and configured to acquire the second data from the server (13) and generate a data accessing signal to the server (13);
wherein after the first data is inputted to the server (13) by a data entry user through the data input terminal (10), a translator acquires the first data through the translation terminal (11), the first data is translated to generate the second data, the second data is inputted to the server (13) by the translator, and a buyer acquires the second data from the server (13) for browsing contents of the second data through the buyer terminal (12).
